Europäisches Patentamt

European Patent Office

Office européen des brevets

(11) Veröffentlichungsnummer: **0 495 266 A1**

# EUROPÄISCHE PATENTANMELDUNG

(21) Anmeldenummer: **91250278.8**

(22) Anmeldetag: **10.10.91**

(51) Int. Cl.$^5$: **B29C 45/77**

(30) Priorität: **18.12.90 DE 4041229**

(43) Veröffentlichungstag der Anmeldung:
**22.07.92 Patentblatt 92/30**

(84) Benannte Vertragsstaaten:
**AT BE CH DE ES FR GB IT LI NL**

(71) Anmelder: **AUTOMATISIERUNGS- UND KUNSTSTOFFTECHNIK GmbH CHEMNITZ Paul-Gruner-Strasse 56**
**O-9048 Chemnitz(DE)**

(72) Erfinder: **Hummel, Erhard, Dipl.-Ing.**
**Georgstrasse 7a**
**O-9002 Chemnitz(DE)**

(74) Vertreter: **Illing, Ralf**
**Patentanwalt, Dipl.Jur.Ing.Ralf Illing,**
**Marschnerstrasse 4a**
**O-9048 Chemnitz(DE)**

(54) **Verfahren zur Regelung und Steuerung des Spritzgiessens.**

(57) Bei dem Verfahren werden Abweichungen vom einmal erkannten richtigen Umschaltpunkt beschränkt und die Umschaltung von Spritzen auf Nachdruck auch bei Werkzeugen mit warmem Vorkammeranguß, Heißkanalanguß und engen Anschnitten sowie geringen Spritzkraftanstiegen über die Fließweglänge in der Phase der Kompression gesichert.

Dazu wird die Spritzkraftschwelle zur Umschaltung von Spritzen auf Nachdrücken bis zum Erreichen eines vom vorangegangenen Spritzzyklus abhängigen Spritzhubes oder einer Spritzzeit bei vorherigem Erreichen der Spritzkraftschwelle verzögert. Die Änderung des Spritzhubes oder die Änderung der Spritzzeit gegenüber dem Spritzhub oder der Spritzzeit des vorangegangenen Spritzzyklus beträgt weniger als ein Zehntel, aber mehr als ein Zehntausendstel des Gesamtspritzhubes oder der Gesamtspritzzeit.

Vorzugsweise wird eine Verringerung der Spritzzeit oder des Spritzhubes gegenüber dem vorangegangenen Zyklus nur dann zugelassen, wenn im vorangegangenen Zyklus die vollständige Werkzeugfüllung zum Zeitpunkt des Erreichens der Spritzkraftschwelle zur Umschaltung auf Nachdruck bereits erreicht war.

Fig 1

EP 0 495 266 A1

Fig 2

2

Die Erfindung betrifft ein Verfahren zur Regelung und Steuerung des Spritzgießens und/oder dessen Überwachung beim Spritzgießen von Formteilen auf Spritzgießmaschinen, bei denen zur Umschaltung von Spritzen auf Nachdrücken der Sollwert der Spritzgeschwindigkeit reduziert wird, und bei denen eine Krafterfassungseinheit für die Spritzkraft vorhanden ist, und bei denen die Zeit zwischen dem Umschaltpunkt und der Änderung des Sollwertes der Spritzgeschwindigkeit und dem Erreichen einer vorgewählten Spritzkraft oder der Spritzkraft bei Beginn der Sollwertänderung der Spritzgeschwindigkeit oder die Zeit zwischen einem ersten Erreichen einer vorgewählten Spritzkraft bei Beginn der Änderung des Sollwertes der Spritzgeschwindigkeit und einem zweiten Erreichen der gleichen oder einer anderen vorgewählten Spritzkraft nach der Änderung des Sollwertes der Spritzgeschwindigkeit oder der Betrag der Kraftdifferenz zwischen der maximalen Spritzkraft zum Zeitpunkt der Änderung des Sollwertes der Spritzgeschwindigkeit und der minimalen Spritzkraft nach der Änderung des Sollwertes der Spritzgeschwindigkeit erfaßt wird und als Vergleichsgröße für die Regelung, Steuerung und/oder Überwachung derart verwendet wird, daß eine Umschaltschwelle zur Umschaltung von Spritzen auf Nachdrücken vom vorhergehenden Spritzzyklus entsprechend dem Werkzeugfüllgrad abgeleitet wird.

In EP 0233548 wird ein Verfahren und eine dazugehörige Einrichtung einer hydraulischen Spritzgießmaschine beschrieben, bei dem die Zeit zwischen dem Umschaltpunkt der Föderstromreduzierung und dem Erreichen eines vorgewählten Druckes oder des Druckes bei Förderstromreduzierung oder die Zeit zwischen einem ersten Erreichen eines vorgewählten Druckes oder des Druckes bei Förderstromreduzierung und einem zweiten Erreichen des gleichen oder eines anderen vorgewählten Druckes nach der Förderstromreduzierung oder der Spritzkolbenhub zum Zeitpunkt der Förderstromreduzierung erfaßt wird und die Änderung des Spritzkolbenhubes bis zum Erreichen eines vorgewählten Druckes oder des Druckes vor Beginn der Förderstromreduzierung oder der Betrag der Druckdifferenz zwischen dem maximalen Druck bei Förderstromreduzierung und dem minimalen Druck nach der Förderstromreduzierung erfaßt wird und als Vergleichsgröße für die Regelung, Steuerung und/oder Überwachung verwendet wird.

Nachteilig bei diesem Verfahren ist, daß bei Werkzeugen mit geringem Fließwiderstand eine geringe Spritzkraftänderung oder eine Änderung des Spritzkraftbedarfes zu einer erheblichen Verschiebung des Umschaltpunktes von Spritzen auf Nachdrücken in Richtung der noch nicht vollständigen Werkzeugfüllung führt.

Bei warmem Vorkammeranguß, Heißkanalanguß und sehr engen Anschnitten kann ein Wechsel des Umschaltpunktes von vollständiger Werkzeugfüllung zur Kraftspitze bei der Durchspritzung des Angusses, der teilweise versiegeln kann, kommen. In diesem Falle ist das Verfahren nach EP 0233548 nur als Einrichthilfe und Steuerung der Druckhöhe bei einer hydraulischen Druckumschaltung, nicht aber zur Prozeßregelung geeignet.

Zu geringe Auflösegenauigkeit des Spritzdruckes und zu starke Beeinflussung des Kraftbedarfes bei der Werkzeugfüllung bei Parameterschwankungen, Plastrohstoffeinflüssen und Änderungen der Umgebungsbedingungen können Schwankungen in der Formteilqualität verursachen.

Es treten teilweise erhebliche Schwankungen im Druckbedarf für den Werkzeugfüllvorgang von Spritzung zu Spritzung auf und der erforderliche Änderungsbetrag des der Umschaltschwelle entsprechenden Drucksollwertes ist so groß, daß bei den vorgesehenen Umschaltmöglichkeiten in Abhängigkeit vom Spritzdruck für bestimmte Werkzeuge und Maschineneinsatzbedingungen ein erhebliches Vorverlegen des Umschaltpunktes vor den eigentlichen volumetrischen Füllpunkt während der Regelung des Umschaltpunktes möglich ist.

Der im Patentanspruch angegebenen Erfindung liegt das Problem zugrunde, Abweichungen vom einmal erkannten richtigen Umschaltpunkt zu beschränken und die Umschaltung auf Nachdruck auch bei Werkzeugen mit warmem Vorkammeranguß, Heißkanalanguß und engen Anschnitten sowie geringen Spritzkraftanstiegen über die Fließweglängen in der Phase der Kompression, das heißt des steilen Anstieges des Werkzeuginnendruckes zu sichern.

Die mit der Erfindung erzielten Vorteile bestehen insbesondere darin, daß der Einsatzbereich des Verfahrens zur Regelung und Steuerung auf Werkzeuge und Maschineneinsatzbedingungen, bei denen erhebliche Schwankungen im Druckbedarf für den Werkzeugfüllvorgang von Spritzung zu Spritzung und bei denen der erforderliche Änderungsbetrag des der Umschaltschwelle entsprechenden Drucksollwertes zu groß ist, erweitert, die Formteilqualität verbessert und die Möglichkeit der Prozeßüberwachung auch auf die obengenannten Einsatzfälle erstreckt wird.

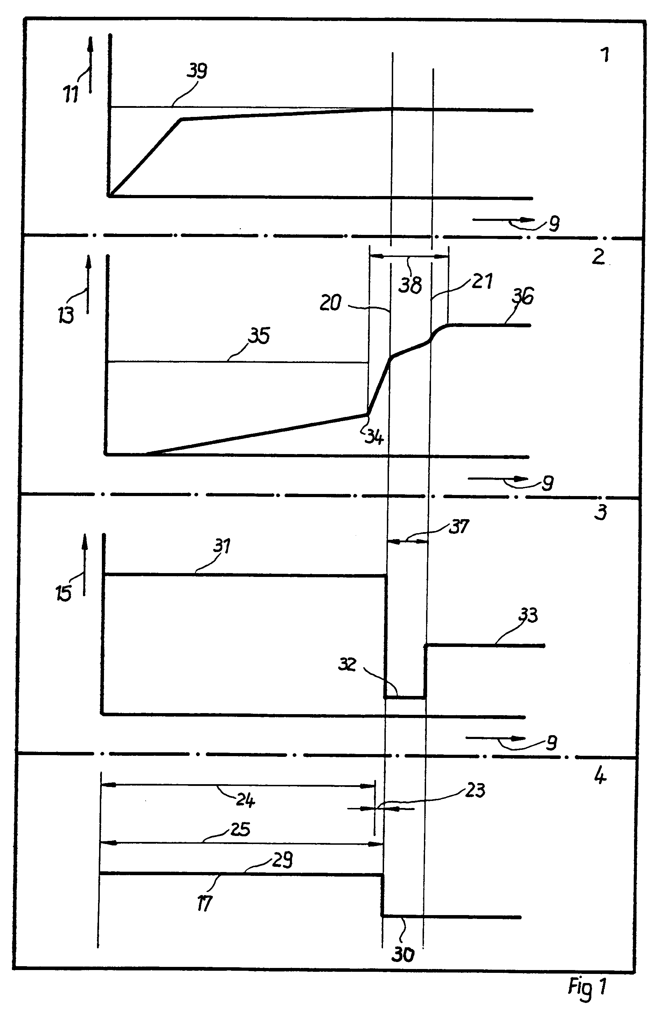

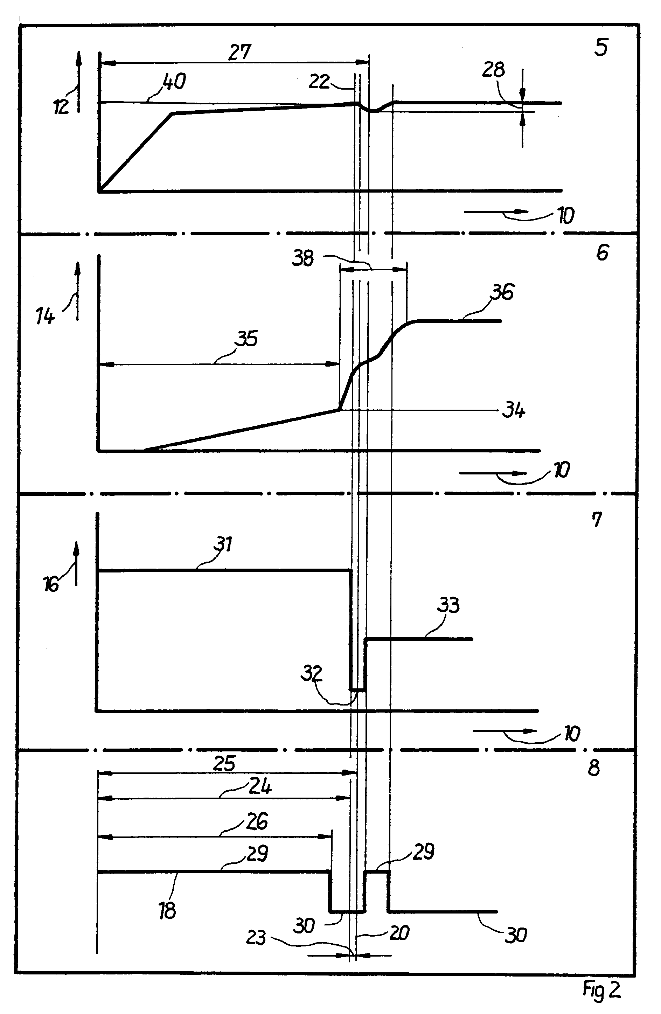

Ein Ausführungsbeispiel der Erfindung ist in der Zeichnung dargestellt. In den Fig. 1 und Fig. 2 werden die Diagramme der Spritzkraft, des Werkzeuginnendruckes, der Spritzgeschwindigkeit und des Kraftmeldesignales gezeigt. Dabei stellen dar:

Fig. 1:     vollständige Werkzeugfüllung,
Fig. 2:     unvollständige Werkzeugfüllung,
Fig. 3:     schematische Darstellung der Verfahrensschritte.

Spritzgießmaschinen, die dem Oberbegriff entsprechen, besitzen eine Krafterfassungseinheit, die während einer Testzeit 37 bei einer reduzierten Spritzgeschwindigkeitsvorgabe 32 kontrolliert, inwieweit die wirkende Spritzkraft 11;12 erhalten bleibt. Bleibt die Spritzkraft 11;12 erhalten, war das Formteil zum Zeitpunkt der Zuschaltung der reduzierten Spritzgeschwindigkeit 32 bereits vollständig gefüllt. Verringert sich die Spritzkraft 11;12 war der Werkzeugfüllvorgang und die Formteilkompression noch nicht ausreichend beendet.

Diese beiden Zustände sind in den Fig. 1 und 2 dargestellt, wobei die Erfindung eine vorzeitige reduzierte Spritzgeschwindigkeitsvorgabe 32 verhindert, auch wann die Spritzkraftschaltschwelle 40 bereits vor Beginn der Kompression im Werkzeughohlraum erreicht wird.

In den Fig. 1 und 2 in den Bildern 1 und 5 ist die Spritzkraft 11;12, in den Bildern ist 2 und 6 der Werkzeuginnendruck 13;14, in den Bildern 4 und 8 ist das Spritzkraftsignal 17;18 und in den Bildern 3 und 7 ist die Spritzgeschwindigkeit 15;16 in Abhängigkeit von der Zeit 9;10 dargestellt.

Die Fig. 1 entspricht einem Einspritzvorgang, bei dem die vollständige Werkzeugfüllung gemeldet wird.

Bei einer vorbestimmten Spritzkraftschaltschwelle 39 wird zum Zeitpunkt 20 von der Spritzgeschwindigkeitsvorgabe 31 auf die reduzierte Spritzgeschwindigkeitsvorgabe 32 zum Zwecke der Feststellung des Füllgrades des Werkzeuges umgeschaltet. Tritt kein Krafteinbruch der Spritzkraft 11 in einer Testzeit 37 auf, war das Werkzeug zum Zeitpunkt der Umschaltung auf die reduzierte Spritzgeschwindigkeitsvorgabe 32 bereits vollständig gefüllt und der Kraftausgleich zwischen dem Meßort der Spritzkraft 11 und dem Werkzeuginnendruck 13 unter Berücksichtigung der Kraftübersetzungsverhältnisse vollzogen. Es erfolgt die Spritzgeschwindigkeitsvorgabe bei Nachdruck 33 nach Ablauf der Testzeit 37 zum Zeitpunkt 21.

In Fig. 1 wird die Feststellung des Füllgrades durch das Erreichen einer bestimmten Spritzkraft 11 zum Zeitpunkt 20 durch Umschalten des Spritzkraftsignals 17 von Null 29 auf Eins 30 ausgelöst.

Würde es zu einem Krafteinbruch 28 kommen, würde dieses Spritzkraftsignal 17 dann wieder von Eins 30 auf Null 29 umschalten. Deutlich erkennbar ist, daß die Feststellung des Füllgrades des Werkzeuges zum Zeitpunkt 20 in der Phase der Kompression des Werkzeuginnendruckes 13, also nach dem Erreichen des Werkzeuginnendruckes zum Zeitpunkt der Werkzeugfüllung 34, der nach einer Zeit 35 erreicht ist, erfolgt.

Nach der Zeit 25, zu der die Feststellung des Füllgrades des Werkzeuges mit der reduzierten Spritzgeschwindigkeitsvorgabe 32 beginnt, sollte keine Erhöhung der Spritzkraft 11 mehr erfolgen. In der Nachdruckphase erreicht der Werkzeuginnendruck 13 den Kompressionsdruck 36.

Ausgehend vom in Fig. 1 dargestellten Einspritzvorgang wird im nächsten Zyklus (Fig. 2) eine neue Spritzkraftschaltschwelle 40, bei der das Spritzkraftsignal 18 anspricht, vorgegeben. Es kann auch die Spritzkraftschalt schwelle 39 beibehalten werden und eine andere, den Spritzkraftbedarf des Werkzeuges erhöhende, Parameteränderung ausgelöst werden, beispielsweise eine Erhöhung der Spritzgeschwindigkeitsvorgabe 31.

Die bisher beschriebene Arbeitsweise entspricht dem bekannten Stand der Technik.

In Fig. 2 ist ein Einspritzvorgang dargestellt, bei dem die unvollständige Werkzeugfüllung gemeldet wird. Dieses wird nach einer Zeit 27 durch das Auftreten des Krafteinbruches 28 deutlich. Würde nach dem bekannten Stand der Technik gearbeitet werden, würde die Zuschaltung der reduzierten Spritzgeschwindigkeitsvorgabe 32 durch das Umschalten des Spritzkraftsignales 18 von Null 29 auf Eins 30 bei Erreichen der Spritzkraftschaltschwelle 40 erfolgen.

Das wäre vor dem Erreichen des Werkzeuginnendruckes der Werkzeugfüllung 34 vor dem Erreichen der Zeit 35, nach der die Kompression im Formteil beginnt. Die Umschaltung auf die reduzierte Spritzgeschwindigkeitsvorgabe 32 würde nach der bisherigen Arbeitsweise nach der Zeit 26, also zu früh, erfolgen. Zu zeitiges Umschalten auf die reduzierte Spritzgeschwindigkeitsvorgabe 32 würde die Formteilqualität nachteilig beeinflussen. Um dieses zu verhindern, wird bei Veränderung eines den Spritzkraftbedarf des Werkzeuges vergrößernden Parameters beziehungsweise Vorgabe einer geringeren Spritzkraftschaltschwelle 40 erfindungsgemäß nur eine vorgegebene Spritzhub- oder Spritzzeitänderung 23 gegenüber der vorhergehenden Zeit 25 zugelassen. Obwohl die Umschaltung des Spritzkraftsignales 18 von Null 29 auf Eins 30 bereits nach einer Zeit 26 erfolgt, kommt die reduzierte Spritzgeschwindigkeitsvorgabe 32 erst später nach Ablauf der Zeit 24 zur Wirkung.

Ausgehend vom vorhergehenden Zyklus (Fig. 1), bei dem zu einer Zeit 25 die Spritzkraftschaltschwelle 39 erreicht wurde, wird nun eine um die Spritzzeitänderung 23 verringerte Zeit 24 vorgegeben. Da bei der Zeit 24 der reduzierten Spritzgeschwindigkeitsvorgabe 32 der Ausgleich der Spritzkraft 12 zum Werkzeuginnendruck 14 noch nicht ausreichend vollzogen war, kommt es nach der Zeit 27 zu einem Krafteinbruch 28, der eine Änderung des Spritzkraftsignales 18 von Eins 30 auf Null 29 bewirkt.

Um den Kompressionsdruck schnell zu erreichen,kann jetzt nach der Zeit 27 auf die Spritzgeschwindigkeitsvorgabe bei Nachdruck geschaltet werden.

Es ist auch möglich,daß die reduzierte Spritzgeschwindigkeitsvorgabe 32 gleich der Spritzgeschwindigkeitsvorgabe bei Nachdruck 33 ist.

Für den nächsten Zyklus wird nun entsprechend dem Stand der Technik eine neue Spritzkraftschaltschwelle vorgegeben. Gleichzeitig wird erfindungsgemäß die zeitliche Verlegung des Umschaltpunktes nuf die reduzierte Spritzgeschwindigkeitsvorgabe 32 begrenzt durch die vorgegebene Spritzhub- oder Spritzzeitänderung 23. Für den beschriebenen und in Fig. 2 dargestellten Fall ist es günstig, eine weitere Verringerung des Spritzhubes oder der Spritzzeit zu unterdrücken. Damit würde im nächsten Zyklus die Umschaltung auf die reduzierte Spritzgeschwindigkeitsvorgabe 32 erst nach dem Ablauf der Zeit 24 in Frage kommen. Mit Umschaltung auf die reduzierte Spritzgeschwindigkeitsvorgabe 32 erfolgt der Start der Nachdruckzeit. Sollte im nächsten Spritzzyklus nach Ablauf der Zeit 24 das Spritzkraftsignal 17;18 bereits von Null 29 auf Eins 30 geschaltet haben, erfolgt nach Ablauf der Zeit 24 die Umschaltung auf die reduzierte Spritzgeschwindigkeitsvorgabe 32. Ist nach Ablauf der Zeit 24 des Spritzkraftsignal 17;18 Null 29, wird erst durch Schalten des Spritzkraftsignals 17;18 auf Eins 30 bei Erreichen der Spritzkraftschaltschwelle 39;40 die Umschaltung auf die reduzierte Spritzgeschwindigkeitsvorgabe 32 ausgelöst.

In einer hydraulischen Spritzgießmaschine kann bei der Arbeit nach diesem Verfahren günstig mit einer Druckvorgabe für den maximalen Spritzdruck gearbeitet werden. Ist der eingestellte Druck erreicht, wird das Spritzkraftsignal 17;16 von Null 29 auf Eins 30 schalten. Mit diesem Spritzkraftsignal 17;18 wird, soweit die Bedingung der bereite abgelaufenen vorgegebenen Zeit 24;25 erfüllt ist, der Förderstrom für die reduzierte Spritzgeschwindigkeitsvorgabe 32 zugeschaltet.

Der Spritzhub oder die Spritzzeit werden erst nach dem vollzogenen Anfahrvorgang in die Regelung einbezogen.

Dabei wird immer der Zustand einer zu hohen Spritzkraftschaltschwelle 39 für den Beginn des Einbeziehens des Spritzhubes oder der Zeit 24 verwendet.

Damit wird gesichert, daß der Werkzeuginnendruck zum Zeitpunkt der Werkzeugfüllung 34 zum Zeitpunkt 20;22 der reduzierten Spritzgeschwindigkeitsvorgabe 32 bereits erreicht ist, und dieser innerhalb der Kompressionszeit 38 liegt.

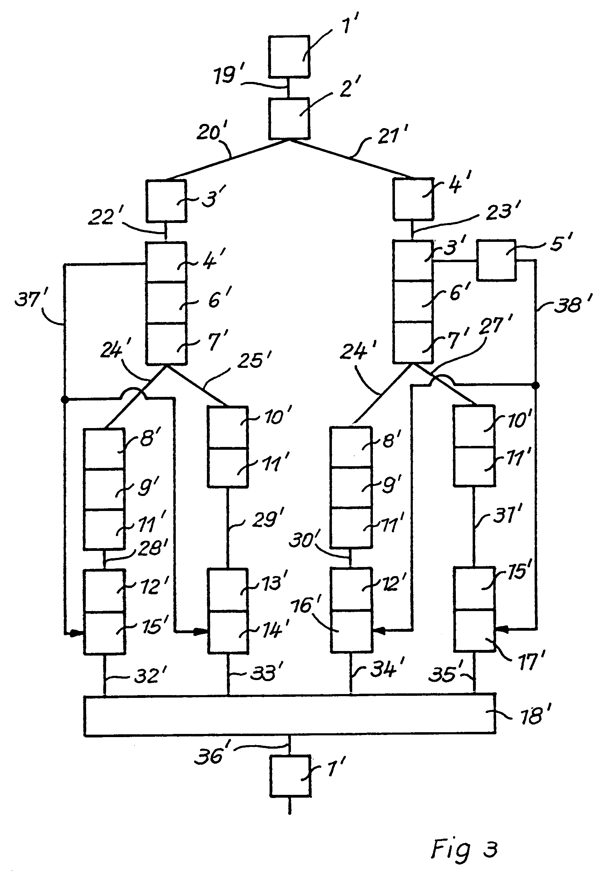

Ausgehend von der Fig. 3 soll der Verfahrensablauf des Einspritzvorganges eines Anwendungsbeispiels erläutert werden.

Im üblichen Programmablauf der Spritzgießmaschine kommt es, wenn die entsprechenden Voraussetzungen vorliegen, zum Startsignal Spritzen 1'.

Nach Erreichen einer bestimmten Wegposition des Spritzkolbens kommt es nach Ablauf der Zeit 19' zum Start der Zeitnahme 2'. Der Start der Zeitnahme 2' kann auch durch das Startsignal Spritzen 1' unmittelbar erfolgen. Für den Spritzvorgang ist eine Spritzkraftschaltschwelle 39;40 und eine Spritzhub- oder Spritzzeitvorgabe ab einem bestimmten Zeitpunkt des Einspritzvorganges oder ab einem bestimmten Spritzhub festgelegt.

Es gibt nun die zwei Möglichkeiten:
Entweder erreicht nach der Zeit 20' die Spritzkraftschaltschwelle 39;40 den Schaltwert Eins 3' und nach der Zeit 22' ist die Spritzzeitvorgabe 4' abgelaufen, oder es ist nach der Zeit 21' das Signal Spritzzeitvorgabe abgelaufen 4' und nach der Zeit 23' das Erreichen des Schaltwertes Eins 3' der Spritzkraftschaltschwelle 39;40 vorhanden. Im letztgenannten Fall erfolgt mit dem Erreichen des Schaltwertes Eins 3' die Erfassung der Spritzzeit 5'.

Während im erstgenannten Fall mit dem Signal Spritzzeitvorgabe abgelaufen 4' die reduzierte Spritzgeschwindigkeitsvorgabe 6' und der Start der Kontrollzeit 7' erfolgt, wird die reduzierte Spritzgeschwindigkeitsvorgabe 6' und damit der Start der Kontrollzeit 7' im zweiten Fall mit dem Erreichen des Schaltwertes Eins 3' ausgelöst. In beiden Fällen läuft das Programm entsprechend dem bisher bekannten Stand der Technik weiter, indem kontrolliert wird, ob innerhalb der Kontrollzeit 24' der Kraftschwellenwert Eins 9' erhalten bleibt oder der Kraftschwellenwert auf den Schaltwert Null 10' zurückgeschaltet wird. Tritt nach einer Zeit 25';27', die unter der Zeit 24' liegt, ein Umschalten auf den Schaltwert Null 10' ein, dann war der Werkzeughohlraum noch nicht richtig gefüllt beziehungsweise der Kraftausgleich zwischen der auf den Schneckenkolben wirkenden Spritzkraft 11;12 und dem Werkzeuginnendruck 13;14 noch nicht vollzogen.

Mit dem Signal Kontrollzeit abgelaufen 8' oder Schaltwert Null 10' erfolgt die Spritzgeschwindigkeitsvorgabe bei Nachdruck 11'. Unmittelbar danach oder nach Ablauf einer Zeit 28'; 29'; 30'; 31' erfolgt die Korrektur und Ausgabe des neuen Kraftvorgabewertes und erforderlichenfalls die Korrektur und Ausgabe der Spritzzeitvorgabe.

Im Falle, daß der Kraftvorgabewert mit Schaltwert Eins 3' schon vor dem Signal Spritzzeitvorgabe abgelaufen 4' erreicht ist, wird für den im Merker 37' eingeschriebenen Wert für die Spritzzeitvorgabe, wie er Spritzzeitvorgabe abgelaufen 4' entspricht, Spritzzeitvorgabe beibehalten 14' ausgegeben, wenn die Ausgabe Kraftvorgabewert erhöhen 13' erfolgt. Im Falle der Ausgabe Kraftvorgabe verringern 12' erfolgt für den im Merker 37' eingeschriebenen Spritzzeitvorgabewert die Ausgabe Spritzzeitvorgabewert verringern 15' und zwar um die Spritzzeitänderung 23.

Im Falle, daß das Signal Spritzzeitvorgabe abgelaufen 4' vor dem Schaltwert Eins 3' für den Spritzkraftvorgabewert vorhanden ist, wird die Zeit aus der Erfassung der Spritzzeit 5' in den Merker 38' übernommen. Beim Signal Kraftvorgabewert verringern 12' erfolgt dann Spritzzeit aus Merker 38' um die Spritzzeitänderung 23 verringern 16' und beim Signal Kraftvorgabewert erhöhen 13' erfolgt dann Spritzzeit aus Merker 38' als Spritzzeitvorgabe laden 17'.

Unter Auftreten der Zeiten 32'; 33'; 34'; 35' erfolgt dann der übliche Programmablauf 18' bis zum erneuten Startsignal Spritzen 1' innerhalb Zeit 36'.

Mit dem neuen Startsignal Spritzen 1' wird dann eine vom vorhergehenden Spritzzyklus abhängige neue Spritzkraftschaltschwelle 39;40 und eine Spritzzeitvorgabe gestellt.

Mit dem beschriebenen Verfahren wird erreicht, daß nach einem einmal vorhandenen richtigem Einstellregime der Maschine Abweichungen vom richtigen Umschaltpunkt auf Nachdruck verhindert werden und dabei die Umschaltung auf Nachdruck immer in der Kompressionsphase geschieht.

Durch das Verfahren wird es möglich, auch für Werkzeuge und Maschineneinsatzbedingungen, bei denen erhebliche Schwankungen im Druckbedarf für den Werkzeugfüllvorgang von Spritzung zu Spritzung und bei denen der erforderliche Änderungsbetrag des der Umschaltschwelle auf Nachdruck entsprechenden Kraftsollwertes zu groß ist, eine stabile Regelung des Einspritzvorganges durchzuführen.

Die Regelung führt zu einer Verbesserung der Formteilqualität und ermöglicht eine Prozeßüberwachung auch für Einsatzfälle, für die der bisherige Stand der Technik es nicht gestattete.

Zusätzlich zum Kraftregelwert steht der gere-gelte Einspritzzeitwert für eine Prozeßdatenerfas-sung zur Verfügung.

Während der Kraftregelwert für alle den Werk-zeugfüllkraftbedarf beeinflussenden Werte der ent-sprechende Kontrollwert ist, kann der für alle die Einspritzgeschwindigkeit, Einspritzzeitwert beeinflussenden Parameter für in Mehrfachwerkzeugen vorhandene verstopfte Formnester oder für im Werkzeug verbliebene Formteilreste, und für Verschleiß am Schneckenkolben oder der Rückstrom-sperre beziehungsweise Formmassenaustritt zwi-schen Düse und Werkzeug als Kontrollwert dienen.

Der erforderliche Aufwand ist gering.

**Patentansprüche**

1. Verfahren zur Regelung und Steuerung des Spritzgießens und/oder dessen Überwachung beim Spritzgießen von Formteilen auf Spritzgießmaschinen, bei denen zur Umschaltung von Spritzen auf Nachdrücken der Sollwert der Spritzgeschwindigkeit reduziert wird, und bei denen eine Krafterfassungseinheit für die Spritzkraft vorhanden ist, und bei denen die Zeit zwischen dem Umschaltpunkt und der Än-derung des Sollwertes der Spritzgeschwindig-keit und dem Erreichen einer vorgewählten Spritzkraft oder der Spritzkraft bei Beginn der Sollwertänderung der Spritzgeschwindigkeit oder die Zeit zwischen einem ersten Erreichen einer vorgewählten Spritzkraft bei Beginn der Änderung des Sollwertes der Spritzgeschwindigkeit und einem zweiten Erreichen der gleichen oder einer anderen vorgewählten Spritzkraft nach der Änderung des Sollwertes der Spritzgeschwindigkeit oder der Betrag der Kraftdifferenz zwischen der maximalen Spritzkraft zum Zeitpunkt der Änderung des Sollwertes der Spritzgeschwindigkeit und der minimalen Spritzkraft nach der Änderung des Sollwertes der Spritzgeschwindigkeit erfaßt wird und als Vergleichgröße für die Regelung, Steuerung und/oder Überwachung derart verwendet wird, daß eine Umschaltschwelle zur Umschaltung von Spritzen auf Nachdrücken vom vorhergehenden Spritzzyklus entsprechend dem Werkzeugfüllgrad abgeleitet wird, **gekennzeichnet dadurch,** daß die Spritzkraftschaltschwelle (39;40) zur Umschaltung von Spritzen auf Nachdrücken bis zum Erreichen eines vom vorangegangenen Spritzzyklus abhängigen Spritzhubes oder einer Spritzzeit bei vorherigem Erreichen der Spritzkraftschaltschwelle (39;40) verzögert wird, und daß die Änderung des Spritzhubes oder die Änderung der Spritzzeit 23 gegenüber dem Spritzhub oder der Spritzzeit des vorangegangenen Spritzzyklusses weniger als ein Zehntel aber mehr als ein Zehntausendstel des Gesamtspritzhubes oder der Gesamtspritzzeit beträgt, und daß vorzugsweise eine Verringerung der Spritzzeit oder des Spritzhubes gegenüber dem vorangegangenen Zyklus nur dann zugelassen wird, wenn im vorangegangenen Zyklus die vollständige Werkzeugfüllung zum Zeit-punkt des Erreichens der Spritzkraftschalt-schwelle (39;40) zur Umschaltung auf Nach-druck bereits erreicht war.

Fig 1

EP 0 495 266 A1

Fig 2

8

Fig 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 233 548 (VEB PLASTMASCHINENWERK WIEHE)<br>* Das ganze Dokument *<br>--- | 1 | B 29 C 45/77 |
| P,X | DE-A-4 035 773 (FORSCHUNGSZENTRUM FÜR UMFORM- UND PLASTVERARBEITUNGSTECHNIK GmbH ZWICKAU)<br>* Das ganze Dokument *<br>--- | 1 | |
| Y | PATENT ABSTRACTS OF JAPAN, Band 12, Nr. 206 (M-708)[3053], 14. Juni 1988; & JP-A-63 009 522 (UBE IND. LTD) 16-01-1988<br>* Zusammenfassung; Abbildungen *<br>--- | 1 | |
| Y | PATENT ABSTRACTS OF JAPAN, Band 9, Nr. 213 (M-408)[1936], 30. August 1985; & JP-A-60 072 713 (UBE KOKAN K.K.) 24-04-1985<br>* Zusammenfassung; Abbildung *<br>--- | 1 | |
| A | PATENT ABSTRACTS OF JAPAN, Band 12, Nr. 52 (M-668)[2899], 17. Februar 1988; & JP-A-62 199 421 (THE JAPAN STEEL WORKS LTD) 03-09-1987<br>* Zusammenfassung; Abbildung *<br>--- | 1 | RECHERCHIERTE SACHGEBIETE (Int. Cl.5)<br><br>B 29 C |
| A | PATENT ABSTRACTS OF JAPAN, Band 11, Nr. 135 (M-585)[2582], 28. April 1987; & JP-A-61 274 916 (THE JAPAN STEEL WORKS LTD) 05-12-1986<br>* Zusammenfassung; Abbildung *<br>---             -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 11-03-1992 | MATHEY X.C.M. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 11, Nr. 82 (M-571)[2529], 12. März 1987; & JP-A-61 237 616 (MITSUBISHI HEAVY IND. LTD) 22-10-1986 * Zusammenfassung; Abbildung * --- | 1 | |
| A | PATENT ABSTRACTS OF JAPAN, Band 11, Nr. 234 (M-611)[2681], 30. Juli 1987; & JP-A-62 44 415 (TOYODA AUTOM. LOOM WORKS LTD) 26-02-1987 * Zusammenfassung; Abbildung * --- | 1 | |
| A | DD-A- 278 547 (VEB PLASTMASCHINENWERK FREITAL) * Das ganze Dokument * ----- | 1 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 11-03-1992 | MATHEY X.C.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)